# FASCICULE DE BREVET EUROPEEN

(11) **EP 1 110 789 B1**
(45) Date de publication et mention de la délivrance du brevet: **26.05.2004**
(21) Numéro de dépôt: 00403661.2
(22) Date de dépôt: 22.12.2000
(51) Int. Cl.: B60K 15/035

(54) **Clapet pour réservoir de carburant et réservoir ainsi équipé**
Kraftstofftankventil und damit ausgerüsteter Tank
Valve for fuel tank and tank equipped therewith

(30) Priorité: 23.12.1999 FR 9916353
(43) Date de publication de la demande: 27.06.2001
(73) Titulaire: COMPAGNIE PLASTIC OMNIUM, 69007 Lyon (FR)
(72) Inventeur: Rosseel, Alexis, 60200 Compiegne (FR)
(74) Mandataire: Tanty, François

(56) Documents cités:
- DE-A- 3 704 641
- DE-A- 4 012 368
- DE-A- 19 509 889
- DE-C- 19 805 071
- US-A- 5 036 823
- US-A- 5 329 164
- US-A- 5 992 441

## Description

La présente invention concerne un clapet pour réservoir à carburant de véhicule automobile selon le préambule de la revendication 1. DE 4 012 368 décrit un tel clapet.

Ce circuit de dégazage communique avec l'atmosphère au travers d'un filtre à charbon actif, encore appelé canister, destiné à empêcher l'envoi dans l'atmosphère des vapeurs de carburant.

Le clapet doit être ouvert lors du remplissage du réservoir et ne pas gêner l'écoulement de l'air et des vapeurs de carburant vers le circuit de dégazage.

Il est néanmoins souhaitable d'empêcher que des gouttelettes de carburant soient entraînées lors du roulage dans le circuit de dégazage et atteignent le filtre à charbon actif, car cela le saturerait rapidement et lui ferait perdre son efficacité.

La demande de brevet allemand DE-195 09 889 décrit dispositif de dégazage d'un réservoir de véhicule automobile destiné à contrôler le passage de vapeurs de carburant vers un canister, le clapet comprenant un élément aimantable pouvant être déplacé par action magnétique pour dégager ou obturer le passage vers le canister.

La demande de brevet allemand DE-40 12 368 décrit un dispositif de dégazage comprenant un élément aimantable mobile, apte à obturer le passage vers un canister, le déplacement du disque étant commandé au moyen d'un électro-aimant et d'un ressort.

Ces deux dispositifs comportent également un corps flottant distinct de l'élément aimantable et apte à se soulever lorsque le niveau de carburant monte dans le réservoir, venant obturer le passage vers le canister en fin de remplissage du réservoir.

Les dispositifs précités présentent une structure relativement complexe, comprenant notamment un nombre important de pièces.

La présente invention a notamment pour objet de proposer un nouveau clapet qui puisse, d'une part, assurer une ventilation efficace du réservoir lors de son remplissage et, d'autre part, réduire le risque que du carburant liquide ne gagne le circuit de dégazage pendant le roulage.

Le brevet US 5 992 441 décrit un clapet pour réservoir à carburant comportant un corps dans lequel est disposé un flotteur reposant sur une bille. Le corps comporte des orifices pour le passage de vapeur de carburant, ces orifices se situant suffisamment haut dans le réservoir de sorte que les gouttelettes de carburant ne puissent pas atteindre l'entrée du circuit de dégazage.

Elle a encore pour objet de simplifier la réalisation du clapet en permettant notamment de réduire le nombre de pièces constitutives.

Elle y parvient grâce au fait que le clapet comporte un obturateur mobile et des moyens pouvant être contrôlés depuis l'extérieur du réservoir pour agir sur cet obturateur et l'amener dans une position prédéterminée lorsque le véhicule est dans un état prédéterminé, par exemple en position de fermeture totale ou partielle du clapet lorsque le moteur est en marche, l'obturateur étant apte à se soulever en flottant à la surface du carburant.

Avantageusement, les moyens pour agir sur l'obturateur amènent ce dernier en position d'ouverture au moment du remplissage du réservoir.

Ainsi, l'obturateur peut avoir une fonction de flotteur uniquement lors du remplissage du réservoir lorsque le clapet est ouvert.

Les moyens pour agir sur l'obturateur peuvent avantageusement comporter un bobinage excité par un courant électrique pour exercer une force électromagnétique sur l'obturateur, ce dernier étant alors aimantable.

Le bobinage peut être excité électriquement au début du remplissage de manière à créer un champ magnétique tendant à annuler les effets d'un aimant permanent.

Avantageusement, en l'absence d'excitation électrique du bobinage, l'aimant permanent est apte à maintenir l'obturateur en position haute de fermeture du clapet.

Dans une réalisation particulière, l'obturateur comporte en partie supérieure une pièce métallique aimantable, par exemple un anneau métallique aimantable, et le clapet comporte un bobinage enroulé autour d'un aimant permanent, de telle sorte que lorsque l'obturateur est en position de fermeture du clapet, la pièce métallique est suffisamment attirée par l'aimant permanent pour maintenir l'obturateur en position de fermeture, alors que le bobinage n'est traversé par aucun courant.

L'attraction magnétique de la pièce métallique de l'obturateur par l'aimant permanent peut cesser lorsque le bobinage est alimenté de manière à créer un champ magnétique inverse de celui de l'aimant permanent, l'obturateur retournant alors par gravité dans sa position d'ouverture.

L'excitation du bobinage qui permet de créer un champ magnétique tendant à annuler les effets de l'aimant permanent au moment du remplissage peut avantageusement être commandée par l'enlèvement du bouchon de remplissage du réservoir.

Dans une autre mise en oeuvre de l'invention, les moyens pour agir sur l'obturateur exploitent l'énergie d'une pompe à carburant, laquelle est avantageusement la même que celle servant à envoyer le carburant aux injecteurs du moteur.

Lorsque le moteur tourne, la pompe à carburant délivre du carburant sous une pression relativement élevée, dont l'énergie est avantageusement utilisée pour amener l'obturateur en position de fermeture.

Lorsque le moteur est à l'arrêt, l'apport d'énergie cesse et l'obturateur peut revenir dans une position d'ouverture.

Le clapet peut comporter une buse projetant un jet de carburant sous l'obturateur, ce jet tendant à l'amener dans une position de fermeture du clapet où il ferme l'accès au circuit de dégazage.

En variante, les moyens pour agir sur l'obturateur peuvent comporter une membrane qui est apte à se gonfler sous l'effet d'un apport de carburant sous pression.

Dans une mise en oeuvre préférée de l'invention, l'obturateur est apte à fermer le circuit de dégazage en cas de retournement accidentel du véhicule.

L'invention a encore pour objet un réservoir à carburant de véhicule automobile équipé d'un clapet tel que précité.

D'autres caractéristiques et avantages de la présente invention apparaîtront à la lecture de la description détaillée qui va suivre, de trois exemples de réalisation non limitatifs de l'invention, et à l'examen du dessin annexé, sur lequel :
- la figure 1 représente de façon schématique un clapet conforme à un premier exemple de réalisation de l'invention, lorsque le véhicule est au repos,
- la figure 2 représente le clapet de la figure 1 lorsque le moteur est en marche,
- la figure 3 est une vue selon le trait de coupe III-III de la figure 2,
- la figure 4 représente de façon schématique un clapet conforme à un deuxième exemple de réalisation de l'invention, lorsque le véhicule est au repos,
- la figure 5 représente le clapet de la figure 4, lorsque le moteur est en marche,
- la figure 6 représente de façon schématique un clapet conforme à un troisième exemple de réalisation de l'invention, lorsque le véhicule est au repos,
- la figure 7 représente le clapet de la figure 6 lorsque le moteur est en marche, et
- la figure 8 représente très schématiquement et partiellement l'aimant permanent et le bobinage du clapet des figures 6 et 7.

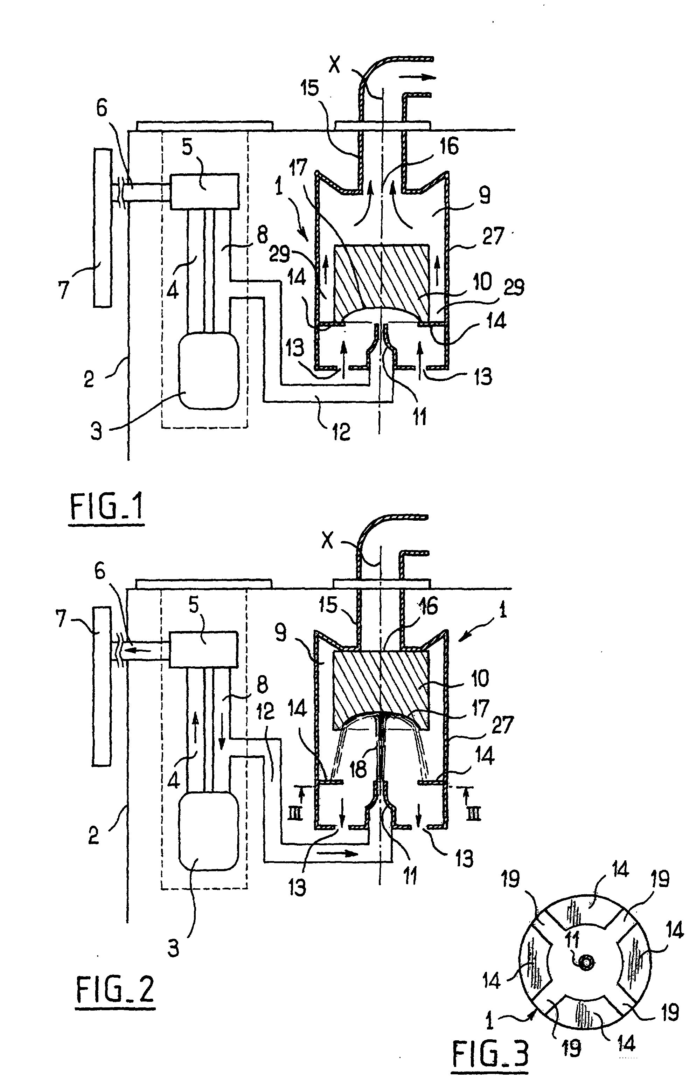

On a représenté sur les figures 1 et 2 un clapet 1 conforme à un premier exemple de réalisation de l'invention.

Ce clapet 1 équipe un réservoir à carburant 2 qui n'a été que partiellement représenté dans un souci de clarté du dessin.

Une pompe 3 représentée très schématiquement est prévue pour prélever du carburant dans le réservoir 2 et l'envoyer aux injecteurs 7 du moteur du véhicule.

Un régulateur 5 est relié à la pompe 3 et aux injecteurs 7 par des conduits respectifs 4 et 6.

Ce régulateur 5 renvoie vers la pompe 3, par un conduit 8, le carburant qui n'est pas consommé par les injecteurs 7.

La pompe 3 forme avec le régulateur 5 et les conduits 4 et 8 un ensemble introduit d'un seul tenant dans le réservoir 2, ce que l'on a schématisé par des pointillés sur les figures 1 et 2.

Le corps, sensiblement tubulaire, du clapet 1 définit un logement 9 de forme allongée selon un axe X, à l'intérieur duquel est mobile, selon ce même axe, un obturateur 10.

Lorsque le véhicule repose sur une surface horizontale, l'axe X est sensiblement vertical.

L'obturateur 10 est guidé à coulissement par la paroi latérale 27 du corps du clapet 1, au moyen de nervures de guidage non représentées sur le dessin.

Ces nervures ménagent entre elles et avec la paroi latérale 27 des passages axiaux 29.

Une buse 11, centrée sur l'axe X, débouche sensiblement à la base du logement 9 pour projeter sous l'obturateur 10 du carburant liquide sous pression, prélevé dans le conduit 8.

La buse 11 peut être venue de moulage d'un seul tenant avec la paroi de fond du corps du clapet 1 ou être constituée par une pièce rapportée.

Le tuyau qui relie la buse 11 au conduit 8 porte la référence 12 sur le dessin.

Le logement 9 communique avec l'intérieur du réservoir 2 par des ajours 13 réalisés dans la paroi de fond du corps du clapet 1, tout autour de la buse 11.

Des portées 14 sont par ailleurs réalisées à hauteur de l'orifice de sortie de la buse 11 pour servir de siège à l'obturateur 10 en l'absence de jet de carburant émis par celle-ci, comme représenté sur la figure 1.

Ces portées 14 ménagent entre elles des passages 19 comme on peut le voir sur la figure 3.

Un conduit 15 d'un circuit de dégazage connu en lui-même et non représenté pénètre de façon étanche à l'intérieur du réservoir 2.

Ce conduit 15 communique avec le logement 9 par un orifice 16, centré sur l'axe X, et réalisé dans la paroi supérieure du corps du clapet 1.

Lorsque le moteur du véhicule est au repos, la pompe 3 ne fonctionne pas et aucun jet de carburant ne sort de la buse 11.

L'obturateur 10 repose alors par sa face inférieure 17 sur les portées 14.

L'air et les vapeurs de carburant présents à l'intérieur du réservoir peuvent quitter celui-ci pour être remplacés par du carburant liquide lors du remplissage, en pénétrant dans le logement 9 du clapet 1 au travers des ajours 13, en traversant les passages 19, en circulant ensuite le long de l'obturateur 10 dans les passages axiaux 29 et en s'échappant par le conduit 15, ce que l'on a illustré par des flèches sur la figure 1.

On notera que lorsque l'obturateur 10 repose sur les portées 14, l'orifice 16 est nettement dégagé, ce qui autorise un débit gazeux relativement élevé à travers le clapet 1 sans perte de charge excessive.

A titre d'exemple, la section de l'orifice 16 peut être comprise entre 1,5 cm² et 2,5 cm², ce qui permet un débit d'air de 6 000 1/mm à travers le clapet 1 avec une perte de charge inférieure à 10 mbar.

A la fin du remplissage, l'obturateur 10 peut se soulever en flottant à la surface du carburant et fermer l'orifice 16, ce qui provoque le déclenchement du pistolet de remplissage.

Lorsque le moteur est en marche, la pompe 3 alimente le conduit 4 avec du carburant sous pression.

Le régulateur 5 en envoie une partie aux injecteurs 7 et la fraction qui n'est pas consommée par ceux-ci est renvoyée dans le réservoir 2 par le conduit 8.

Une fraction au moins du carburant sous pression qui circule dans le conduit 8 sort par la buse 11 pour former un jet 18 de carburant dirigé vers le haut selon l'axe X, venant frapper la face inférieure 17 de l'obturateur 10 et soulever ce dernier comme illustré sur la figure 2.

On remarquera que la face inférieure 17 de l'obturateur 10 est en forme de calotte sphérique pour accroître l'effet sustentateur du jet de carburant 18 émis par la buse 11.

La force du jet 18 est suffisante pour plaquer l'obturateur 10 contre le bord de l'orifice 16 afin d'obturer ce dernier.

Le conduit 15 se trouve ainsi isolé de l'intérieur du réservoir 2 de sorte que d'éventuelles projections de gouttelettes de carburant dues à des vagues de carburant dans le réservoir pendant le roulage sont empêchées de pénétrer dans le circuit de dégazage.

Le carburant projeté sur la face inférieure 17 de l'obturateur 10 retourne dans le réservoir au travers des passages 19 et des ajours 13, ce que l'on a illustré par des flèches sur la figure 2.

En cas de retournement accidentel du réservoir, l'obturateur 10 vient sous l'effet de son poids obturer l'orifice 16.

On comprend que l'invention permet d'agir sur l'obturateur 10 depuis l'extérieur du réservoir 2 en faisant ou non fonctionner la pompe 3. On exerce ainsi une force sur l'obturateur seulement lorsque le moteur est en marche.

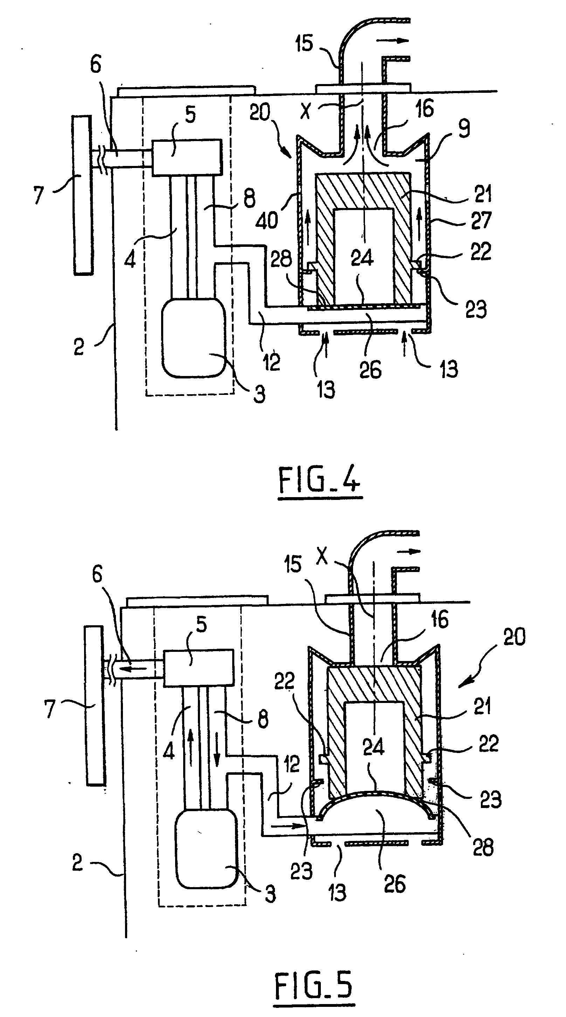

On peut encore atteindre ce résultat par d'autres moyens sans sortir du cadre de l'invention et l'on va maintenant décrire un nouvel exemple de mise en oeuvre de l'invention en référence aux figures 4 et 5.

On a conservé sur ces figures les mêmes chiffres de référence que sur les figures 1 à 3 pour désigner les mêmes éléments constitutifs, qui ne seront pas décrits à nouveau.

Le clapet 20 représenté sur les figures 4 et 5 diffère essentiellement du clapet 1 précédemment décrit par les moyens qui sont utilisés pour soulever l'obturateur, référencé 21.

L'obturateur 21 se présente ici sous la forme d'un cylindre évidé intérieurement sur une partie de sa hauteur à partir de sa face inférieure et comporte extérieurement des reliefs 22.

Ces reliefs 22 viennent reposer, lorsque le véhicule est au repos, sur des portées 23 formant saillie à l'intérieur du logement 9, lesquelles ménagent entre elles des passages à l'instar des portées 14 précédemment décrites.

Le clapet 20 exploite la pression du carburant dans le conduit 8, mais la buse 11 de l'exemple de réalisation précédent a été remplacée par une poche 26 dont la paroi supérieure est constituée par une membrane 24 en un matériau déformable.

La poche 26 communique intérieurement avec le tuyau 12, de sorte que la membrane 24 tend à se gonfler sous la pression du carburant refoulé dans le conduit 8 par le régulateur 5 lorsque le moteur est en marche, comme illustré sur la figure 5.

La poche 26 ménage en outre avec la paroi latérale 27 du clapet 20 des passages non représentés qui permettent aux vapeurs de carburant et à l'air pénétrant par les ajours 13 de gagner la partie supérieure du clapet 20, en circulant le long des passages existant entre la paroi latérale 27 du corps du clapet 20 et l'obturateur 21.

On peut modifier grâce à la membrane 24 la position de l'obturateur en fonction de l'état dans lequel se trouve le véhicule, c'est-à-dire dans l'exemple décrit selon que le moteur est en marche ou non.

Des ajours 40 sont réalisés sur la paroi latérale 27.

Lorsque le moteur est au repos, l'obturateur 21 repose par sa face inférieure 28 sur la membrane 24 qui est alors plane et les reliefs 22 viennent en appui sur les portées 23.

L'air et les vapeurs de carburant présents à l'intérieur du réservoir peuvent gagner l'intérieur du clapet 20 au travers des ajours 13 et 40, traverser les passages qui existent entre la paroi latérale 27 du corps du clapet 20 et la poche 26 puis les passages séparant l'obturateur 21 et la paroi latérale 27 pour gagner finalement le conduit 15 comme illustré par les flèches sur la figure 4.

On notera sur cette figure que l'obturateur 21 est suffisamment éloigné de l'orifice 16 au début du remplissage pour permettre une ventilation efficace du réservoir jusqu'à la fin du remplissage de ce dernier, tout comme dans l'exemple de réalisation précédent.

Lorsque la membrane 24 se gonfle sous l'effet de la pression du carburant contenu dans le conduit 8, comme illustré sur la figure 5, l'obturateur 21 est appliqué par la membrane 24 contre le bord de l'orifice 16 pour fermer l'accès au conduit 15.

On a décrit en référence aux figures 1 à 5 deux exemples de réalisation dans lesquels l'énergie qui permet de maintenir l'obturateur en position haute d'obturation lorsque le moteur tourne provient de la pression dans le circuit retour de la pompe 3.

Bien entendu, on ne sort pas du cadre de la présente invention en utilisant la pression dans le circuit aller 4 de la pompe 3.

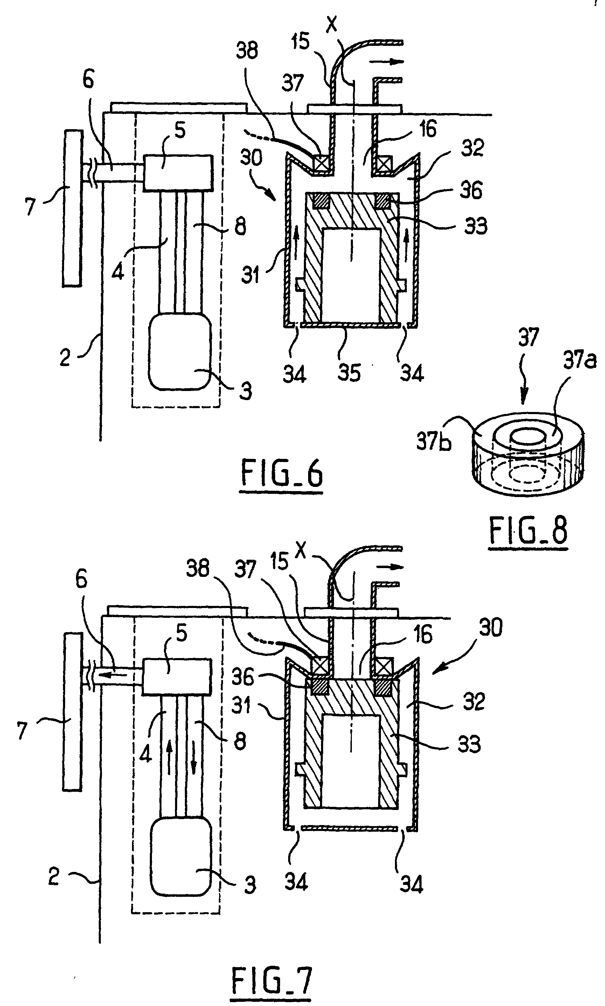

On a représenté sur les figures 6 et 7 un clapet 30 conforme à un troisième exemple de réalisation de l'invention.

Le clapet 30 diffère des clapets 1 et 20 précédemment décrits par le fait que ce sont des moyens électromagnétiques qui sont mis en oeuvre pour amener l'obturateur dans la position de fermeture du clapet.

Le clapet 30 comporte un corps 31, sensiblement tubulaire, définissant un logement 32 à la partie supérieure duquel débouche le conduit de dégazage 15 par l'orifice 16, à l'instar des exemples de réalisation précédents.

L'obturateur, mobile dans le corps 31, porte ici la référence 33.

Le corps 31 comporte des ajours 34 en partie inférieure et le cas échéant sur sa paroi latérale, pour permettre à l'air contenu dans le réservoir de s'échapper vers le conduit de dégazage lorsque le clapet est ouvert.

L'obturateur 33 comporte à sa partie supérieure une pièce aimantable constituée par un anneau métallique 36.

Un ensemble 37 constitué d'un aimant permanent 37a autour duquel est enroulé un bobinage 37b est fixé à la partie supérieure du corps 31, comme on peut le voir sur les figures 6 à 8.

En l'absence d'excitation électrique du bobinage, l'aimant permanent 37a est capable de maintenir par attraction magnétique l'anneau 36 et par voie de conséquence l'obturateur 33 en position haute de fermeture du clapet.

Le bobinage 37b peut être excité pour créer un champ magnétique inverse de celui créé par l'aimant permanent 37a et faire en sorte que l'anneau métallique 36 cesse d'être attiré par l'ensemble 37, l'obturateur 33 retombant alors par gravité en position basse d'ouverture.

Le bobinage 37b de l'ensemble 37 est relié par un câble électrique 38 à une source de courant électrique située à l'extérieur du réservoir, par exemple la batterie du véhicule, par l'intermédiaire d'un interrupteur et d'un dispositif de commande impulsionnel, non représenté.

L' interrupteur peut être commandé par le démontage du bouchon du réservoir lors du remplissage, pour exciter le bobinage 37b de l'ensemble 37.

La durée d'excitation du bobinage 37b, après le démontage du bouchon du réservoir est commandée par le dispositif de commande impulsionnel et peut être relativement courte et égale à 5 secondes par exemple.

Il suffit que cette durée permette à l'obturateur 33 de se séparer de l'aimant permanent 37a.

Une fois l'obturateur 33 retombé en position basse d'ouverture, avant remise en place du bouchon, et après cessation du courant d'excitation du bobinage 37b, l'aimant permanent 37a crée à nouveau un champ magnétique attractif.

Lorsque l'obturateur 33 qui se soulève lors du remplissage est suffisamment proche de l'aimant permanent 37a, il est attiré par ce dernier dans sa position haute de fermeture.

Le fait de commander l'excitation du bobinage pendant de brèves durées conduit à une consommation électrique relativement modeste et ne crée pas d'échauffement préjudiciable à la sécurité de l'ensemble,

Bien entendu, l'invention n'est pas limitée aux exemples de réalisation qui viennent d'être décrits.

On peut notamment adjoindre aux clapets qui ont été décrits des ressorts destinés à compenser une partie du poids des obturateurs.

De tels ressorts sont utiles pour assurer l'obturation du conduit de dégazage en cas de retournement partiel du véhicule.

## Revendications

1. Clapet pour réservoir à carburant, destiné a être relié à un circuit de dégazage (15), comportant un obturateur mobile pour réduire le risque que du carburant liquide ne gagne le circuit de dégazage pendant le roulage et des moyens (11 ; 24 ; 37) pouvant être contrôlés depuis l'extérieur du réservoir (2) pour agir sur l'obturateur (10 ; 21 ; 33) l'obturateur étant apte à se soulever en flottant à la surface du carburant, **caractérisé par le fait que** les moyens (11; 24; 37) pouvant être contrôlés amenent l'obturateur dans une position de fermeture du clapet lorsque le moteur est en marche.

2. Clapet selon la revendication 1, **caractérisé par le fait que** lesdits moyens pour agir sur l'obturateur amènent ce dernier en position d'ouverture au moment du remplissage du réservoir.

3. Clapet selon l'une quelconque des revendications précédentes, **caractérisé par le fait que** lesdits moyens pour agir sur l'obturateur comportent un bobinage (37b), l'obturateur étant aimantable.

4. Clapet selon la revendication précédente, **caractérisé par le fait que** ledit bobinage (37b) est excité électriquement au début du remplissage de manière à créer un champ magnétique tendant à annuler les effets d'un aimant permanent (37a).

5. Clapet selon la revendication précédente, **caractérisé par le fait que**, en l'absence d'excitation électrique du bobinage (37b), l'aimant permanent (37a) est apte à maintenir l'obturateur en position haute de fermeture du clapet.

6. Clapet selon l'une quelconque des revendications 3 à 5, **caractérisé par le fait que** l'excitation du bobinage (37b) est commandée par l'enlèvement du bouchon de remplissage du réservoir.

7. Clapet selon l'une quelconque des revendications 3 à 6, **caractérisé par le fait que** l'obturateur comporte à sa partie supérieure une pièce métallique aimantable (36).

8. Clapet selon l'une quelconque des revendications 3 à 7, **caractérisé par le fait que** l'obturateur comporte à sa partie supérieure un anneau métallique aimantable (36).

9. Clapet selon l'une quelconque des revendications 3 à 8, **caractérisé par le fait que** le bobinage (37b) est enroulé autour de l'aimant permanent (37a).

10. Clapet selon l'une quelconque des revendications 1 et 2, **caractérisé par le fait que** lesdits moyens (11 ; 24) pour agir sur l'obturateur exploitent l'énergie d'une pompe (3) à carburant.

11. Clapet selon la revendication précédente, **caractérisé par le fait que** lesdits moyens pour agir sur l'obturateur comportent une buse (11) pour projeter un jet de carburant (18) sous l'obturateur (10), ce jet (18) tendant à l'amener dans une position où il ferme l'accès au circuit de dégazage.

12. Clapet selon la revendication précédente, **caractérisé par le fait que** l'obturateur (17) présente une face inférieure concave sur laquelle est dirigé le jet de carburant (18).

13. Clapet selon la revendication 10, **caractérisé par le fait que** lesdits moyens pour agir sur l'obturateur comportent une membrane (24) qui est apte à se gonfler sous l'effet d'un apport de carburant sous pression, ladite membrane (24) tendant à amener, en se gonflant, l'obturateur dans une position où il ferme l'accès au circuit de dégazage.

14. Clapet selon l'une quelconque des revendications précédentes, **caractérisé par le fait que** l'obturateur (10 ; 21 ; 33) est apte à fermer le circuit de dégazage en cas dé retournement accidentel du véhicule.

15. Réservoir (2) à carburant de véhicule automobile équipé d'un clapet (1 ; 20 ; 30) défini dans l'une quelconque des revendications précédentes.

## Patentansprüche

1. Ein Kraftstofftankventil, das für den Anschluss an einen Entgasungskreis (15) ausgelegt ist, weist ein bewegliches Schließglied und zur Verringerung des Risikos, dass flüssiger Kraftstoff nicht während des Fahrbetriebs in den Entgasungskreis gelangt, Mittel (11; 24; 37) auf, die von außerhalb des Behälters (2) kontrolliert werden können, um auf das Schließglied (10; 21; 33) einzuwirken, wobei das Schließglied (10; 21; 33) in der Lage ist, sich anzuheben und an der Oberfläche des Kraftstoffs zu schwimmen, **dadurch gekennzeichnet, dass** die Mittel (11; 24; 37) so betätigt werden können, dass das Schließglied (10; 21; 33) in eine Position gebracht wird, in der es das Ventil schließt, wenn der Motor läuft.

2. Das Ventil entsprechend Anspruch 1, **gekennzeichnet durch** die Tatsache, dass die Mittel zum Einwirken auf das Schließglied dieses in dem Moment in eine Öffnungsposition bringen, wenn der Behälter betankt wird.

3. Das Ventil entsprechend einem beliebigen der vorausgegangenen Ansprüche, **gekennzeichnet durch** die Tatsache, dass die Mittel für das Einwirken auf das Schließglied eine Spule (37b) aufweisen, und dass das Schließglied magnetisierbar ist.

4. Das Ventil entsprechend dem vorausgegangenen Anspruch, **gekennzeichnet durch** die Tatsache, dass die Spule (37b) elektrisch am Anfang des Füllens angeregt wird, dergestalt, dass ein Magnetfeld erzeugt wird, das die Wirkung eines Permanentmagneten (37a) annulliert.

5. Das Ventil entsprechend dem vorausgegangenen Anspruch, **gekennzeichnet durch** die Tatsache, dass ohne elektrische Erregung der Spule (37b), der Permanentmagnet (37a) in der Lage ist, das Schließglied in seiner oberen, das Ventil schließenden Position zu halten.

6. Das Ventil entsprechend irgendeinem der Ansprüche 3 bis 5, **gekennzeichnet durch** die Tatsache, dass Erregung der Spule (37b) veranlasst wird, indem man den Verschlussdeckel vom Behälter entfernt.

7. Das Ventil entsprechend irgendeinem der Ansprüche 3 bis 6, **gekennzeichnet durch** die Tatsache, dass das Schließglied in seinem oberen Bereich ein magnetisierbares Metallteil (36) aufweist.

8. Das Ventil entsprechend irgendeinem der Ansprüche 3 bis 7, **gekennzeichnet durch** die Tatsache, dass das Schließglied in seinem oberen Bereich einen magnetisierbaren Metallring (36) aufweist.

9. Das Ventil entsprechend irgendeinem der Ansprüche 3 bis 8, **gekennzeichnet durch** die Tatsache, dass die Spule (37b) um den dauerhaften Magneten (37a) gewickelt ist.

10. Das Ventil entsprechend irgendeinem der Ansprüche 1 und 2, **gekennzeichnet durch** die Tatsache, dass die Mittel (11; 24) für das Einwirken auf dem Schließglied die Energie einer Kraftstoffpumpe (3) nutzen.

11. Das Ventil entsprechend dem vorausgegangenen Anspruch, **gekennzeichnet durch** die Tatsache, dass die Mittel für das Einwirken auf das Schließglied eine Düse (11) aufweisen, um einen Strahl an Kraftstoff (18) auf das Schließglied (10) zu spritzen, dieser Strahl (18) hat den Effekt, das Schließglied in eine Position zu bringen, in der es den Zugang zum Entgasungskreis schließt.

12. Das Ventil entsprechend dem vorausgegangenen Anspruch, **gekennzeichnet durch** die Tatsache, dass das Schließglied (17) eine konkave Unterseite hat, gegen die der Kraftstoffstrahl (19) gerichtet ist.

13. Das Ventil entsprechend dem Anspruch 10, **gekennzeichnet durch** die Tatsache, dass die Mittel für das Einwirken auf das Schließglied eine Membrane (24) aufweisen, die sich unter dem Effekt von Kraftstoffzuleitung unter Druck ausdehnt, diese Membrane (24) bringt dann, wenn sie sich ausdehnt, das Schließglied in eine Position, in der es den Zugang zum Entgasungskreis schließt.

14. Das Ventil entsprechend irgendeinem der vorausgegangenen Ansprüche, **gekennzeichnet durch** die Tatsache, dass das Schließglied (10; 21; 33) in der Lage ist, den Entgasungskreis in dem Falle zu schließen, wenn das Fahrzeug unfallbedingt überrollt.

15. Ein Kraftstofftank (2) für ein Kraftfahrzeug, der mit einem Ventil (1; 20; 30) versehen ist, wie es in irgendeinem der vorausgegangenen Ansprüche definiert ist.

## Claims

1. A fuel tank valve for connection to a degassing circuit (15), the valve comprising a moving closure member to reduce the risk of liquid fuel reaching the degassing circuit while the vehicle is running, and means (11; 24; 37) capable of being controlled from outside the tank (2) to act on the closure member (10; 21; 33), the closure member being suitable for rising by floating on the surface of the fuel, **characterized by** the fact that the means (11; 24; 37) capable of being controlled bring the closure member into a position in which it closes the valve when the engine is running.

2. A valve according to claim 1, **characterized by** the fact that said means for acting on the closure member bring it into a position in which it opens the valve when the tank is being filled.

3. A valve according to any preceding claim, **characterized by** the fact that said means for acting on the closure member comprise a coil (37b), the closure member being magnetizable.

4. A valve according to the preceding claim, **characterized by** the fact that said coil (37b) is electrically excited at the beginning of filling so as to create a magnetic field that tends to cancel the effects of a permanent magnet (37a).

5. A valve according to the preceding claim, **characterized by** the fact that in the absence of electrical excitation of the coil (37b), the permanent magnet (37a) is suitable for holding the closure member in its high, valve-closing position.

6. A valve according to any one of claims 3 to 5, **characterized by** the fact that the coil (37b) is caused to be excited by removing the filler cap from the tank.

7. A valve according to any one of claims 3 to 6, **characterized by** the fact that the top portion of the closure member includes a magnetizable metal part (36).

8. A valve according to any one of claims 3 to 7, **characterized by** the fact that the top proton of the closure member includes a magnetizable metal ring (36).

9. A valve according to any one of claims 3 to 8, **characterized by** the fact that the coil (37b) is wound around the permanent magnet (37a).

10. A valve according to any one of claims 1 and 2, **characterized by** the fact that said means (11; 24) for acting on the closure member make use of the energy of a fuel pump (3).

11. A valve according to the preceding claim, **characterized by** the fact that said means for acting on the closure member comprise a nozzle (11) for squirting a jet of fuel (18) under the closure member (10), said jet (18) tending to bring the closure member into a position where it closes off access to the degassing circuit.

12. A valve according to the preceding claim, **characterized by** the fact that the closure member (17) has a concave bottom face against which the fuel jet (19) is directed.

13. A valve according to claim 10, **characterized by** the fact that said means for acting on the closure member comprise a diaphragm (24) which is suitable for inflating under the effect of fuel under pressure being delivered thereto, said diaphragm (24), on inflating, tending to bring the closure member into a position where it closes off access to the degassing circuit.

14. A valve according to any preceding claim, **characterized by** the fact that the closure member (10; 21; 33) is suitable for closing off the degassing circuit in the event of the vehicle accidentally rolling over.

15. A motor vehicle fuel tank (2) fitted with a valve (1; 20; 30) as defined in any preceding claim.
